# EUROPEAN PATENT APPLICATION

(11) **EP 1 514 676 A1**
(43) Date of publication of application: **16.03.2005**
(21) Application number: 04425667.5
(22) Date of filing: 03.09.2004
(51) Int. Cl.: B29D 31/515, A43B 13/20

(54) **Manufacturing process for footwear bottoms with anti-shock insert**

(30) Priority: 11.09.2003 IT MC20030110
(71) Applicant: Europlastica Moda S.p.A., 63018 Porto Sant'Elpidio (AP) (IT)
(72) Inventor: Limoncelli, Salvatore, 62012 Civitanova Marche (MC) (IT)
(74) Representative: Baldi, Claudio, Ing.

(57) **Abstract**

The present invention refers to a manufacturing process used to obtain plastic footwear bottoms with a special anti-shock insert composed of one or more sealed shock-absorbing tubes (1) made of elastic flexible materials, which can be filled with compressed air or at atmospheric pressure and incorporated on the sides and/or back of the heel of the bottom (F) during moulding.

The present invention also refers to the bottom obtained with the aforementioned manufacturing process.

## Description

The present patent application refers to a manufacturing process for footwear bottoms made of moulded plastic materials provided with a special anti-shock insert; the present invention also refers to the bottom obtained with the aforementioned manufacturing process.

Footwear bottoms made of moulded plastic materials are typically provided with anti-shock inserts, that is to say with a sort of shock-absorbing pads located on the heel and designed to cushion the impacts with the ground suffered by the heel at every step.

The manufacturing modes of the said anti-shock inserts have been completely standardised.

In particular, an insert made of softer plastic material or possibly a sort of pad filled with air is normally incorporated into the material used to mould the bottom; in these cases the insert or shock-absorbing pad has a closed geometric (circular, elliptical, square, etc.) shape and is immersed and hidden into the sole.

The idea on which the present invention is based is to innovate the aforementioned technology in order to give a positive stimulus, including in terms of aesthetics, to the sector of plastic moulded bottoms in which constant progress is a determining factor for commercial success.

In particular, the process of the invention provides for the incorporation of a special anti-shock pad into a plastic moulded bottom, which is basically shaped as a tube obtained with elastic flexible plastic material. The said tube can be given any type of open or closed shape during incorporation into the moulding material of the bottom.

Moreover, some sections of the shock-absorbing tube can remain visible on the sides of the bottom and possibly on the back of the heel.

In practical terms, according to the process of the invention, the shock-absorbing tube (that can be filled with compressed air or at atmospheric pressure) is fixed inside the mould in which the fluid plastic material is injected or cast to mould the bottom.

In case of an open shape (for example, horseshoe shape), the tube has perforated fastening sections at its free ends, because the holes are designed to be invaded by the moulding material of the bottom in order to hold the tube in permanent stable position inside the bottom.

To maintain the correct position during moulding, the tube is blocked inside the mould with pins or nails, according to a well-known traditional technology.

Additionally, the mould must be provided with suitable impressions in which the tubes that are to remain visible on the sides of the bottom can partial engage, thus avoiding being completely immersed in the material used to mould the bottom.

Another advantageous characteristic of the technology of the invention refers to the fact that the tube can be made with any colour, in order to match or contrast the colour of the bottom.

A transparent version of the same tube can be obtained in order to provide a very modern bottom with light structure.

For major clarity the description of the invention continues with reference to the enclosed drawing, which is intended for purposes of illustration only and not in a limiting sense, whereby:
- Fig. 1 is an axonometric view of an open version of the anti-shock insert of the process of the invention;
- Fig. 2 is a side view of the bottom obtained according to the process of the invention;
- Fig. 3 is a transversal cross-section of the heel of the bottom of Fig. 2.

With reference to the aforementioned figures, the process of the invention uses a sealed shock-absorbing tube (1) made of plastic materials with elasticity and flexibility properties, which can be filled with compressed air or at atmospheric pressure, as anti-shock insert for a bottom (F) obtained with moulded plastic materials.

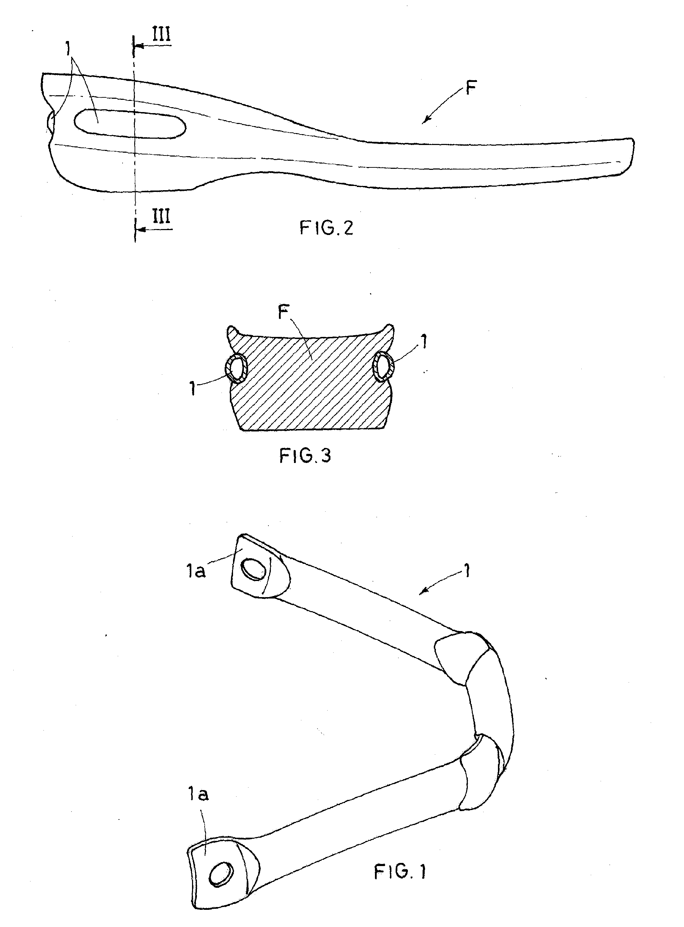

As mentioned earlier, the tube (1) can be given any type of closed or open shape; as shown in Fig. 1, in case of an open shape, the two ends of the tube (1) have perforated fastening sections (1a) designed to be incorporated and held inside the moulding material of the bottom (F).

In case of a tube (1) with closed shape (1), the perforated sections (1 a) are located on the internal perimeter and preferably regularly spaced.

The tube (1) is placed inside the mould used to obtain the bottom (F) before the fluid plastic material is injected or cast into the mould.

To that end, the mould is provided with longitudinal impressions on the vertical walls of the heel, in which the sections of the shock-absorbing tube (1) can partially engage, thus remaining visible on the sides and possibly on the back of the heel, as shown in Figs. 2 and 3.

## Claims

1. Manufacturing process for footwear plastic moulded bottoms provided with heel with anti-shock properties, **characterised by** the fact that it consists in the following sequence of operations
- inclusion of one or more sealed shock-absorbing tubes (1) made of materials with elasticity and flexibility properties that can be filled with compressed air or at atmospheric pressure into suitable longitudinal impressions located on the sides and/or back of the heel of the mould used to obtain the bottom (F)
- injection or casting of plastic material into the mould in order to incorporate the shock-absorbing tubes (1) that are suitably provided with perforated sections (1a)
- removal of the bottom (F) from the mould.

2. Process as defined in claim 1, **characterised by** the fact that each of the sealed shock-absorbing tubes (1) can be given any type of closed or open shape inside the mould.

3. Bottom made of moulded plastic materials obtained according to the manufacturing process as defined in claim 1, **characterised by** the fact that it incorporates anti-shock inserts represented by the aforementioned sealed shock-absorbing tubes (1) on the sides and/or back of the heel.
